**Europäisches Patentamt**

**European Patent Office**

**Office européen des brevets**

(11) Veröffentlichungsnummer: **0 076 454**

**A1**

(12) # EUROPÄISCHE PATENTANMELDUNG

(21) Anmeldenummer: **82108952.1**

(22) Anmeldetag: **28.09.82**

(51) Int. Cl.³: **F 02 B 77/08**
**B 60 Q 9/00, G 07 C 3/00**

(30) Priorität: **07.10.81 DE 3139798**

(43) Veröffentlichungstag der Anmeldung:
**13.04.83 Patentblatt 83/15**

(84) Benannte Vertragsstaaten:
**DE FR GB**

(71) Anmelder: **ROBERT BOSCH GMBH**
**Postfach 50**
**D-7000 Stuttgart 1(DE)**

(72) Erfinder: **Heintz, Frieder, Dipl.-Ing.**
**Buchenring 36**
**D-7513 Stutensee-Büchig(DE)**

(72) Erfinder: **Hugel, Robert, Dipl.-Phys.**
**Joseph-von-Eichendorff-Strasse 9**
**D-7500 Karslruhe(DE)**

(54) **Anzeigevorrichtung für Wartungsintervalle bei Brennkraftmaschinen.**

(57) Drehzahlabhängige Zählimpulse werden über einen einstellbaren Frequenzteiler (17) einer Zählvorrichtung (18) zugeführt, wobei die Einstellung des Teilungsverhältnisses durch ein temperaturabhängiges Signal erfolgt. Dadurch werden die Drehzahlimpulse temperaturabhängig gewichtet. Mit anwachsendem Zählerstand in der Zählvorrichtung (18) werden nacheinander Anzeigeeinheiten, insbesondere Leuchtdioden (19 bis 21) aktiviert, um den Ablauf eines Wartungsintervalls für das Kraftfahrzeug stufenweise anzuzeigen.

EP 0 076 454 A1

R. 17388

18.9.1981 Ve/Hm

ROBERT BOSCH GMBH, 7000 STUTTGART 1

## Anzeigevorrichtung für Wartungsintervalle bei Brennkraftmaschinen

### Stand der Technik

Die Erfindung geht aus von einer Anzeigevorrichtung für Wartungsintervalle bei Brennkraftmaschinen, insbesondere in Kraftfahrzeugen, nach der Gattung des Hauptanspruchs. Mit solchen Anzeigevorrichtungen für Ölwechselintervalle sind z.B. BMW-Fahrzeuge des Modelljahres 1981 ausgestattet. Die Verknüpfung der erfaßten Größen, Motortemperatur, zurückgelegte Wegstrecke, Drehzahl ist dabei relativ aufwendig, und es werden mehrere Sensoren benötigt.

### Vorteile der Erfindung

Die erfindungsgemäße Anzeigevorrichtung mit den kennzeichnenden Merkmalen des Hauptanspruchs hat demgegenüber den Vorteil, daß ein sehr einfacher Aufbau mit wenigen billigen, handelsüblichen integrierten Schaltungen möglich ist. Es wird nur ein Temperatursensor benötigt, der ohnehin zur

...

17388
0076454

Messung der Motortemperatur in jeder Brennkraftmaschine
vorhanden ist. Ein Drehzahlsignal kann aus der Zündanlage der Brennkraftmaschine abgeleitet werden. Durch die
verwendeten Bauelemente ist eine Integration gewährleistet, z.B. in einem Fahrdatenrechner.

Durch die in den Unteransprüchen aufgeführten Merkmale
sind vorteilhafte Weiterbildungen und Verbesserungen der
im Hauptanspruch angegebenen Anzeigevorrichtung möglich.

Zeichnung

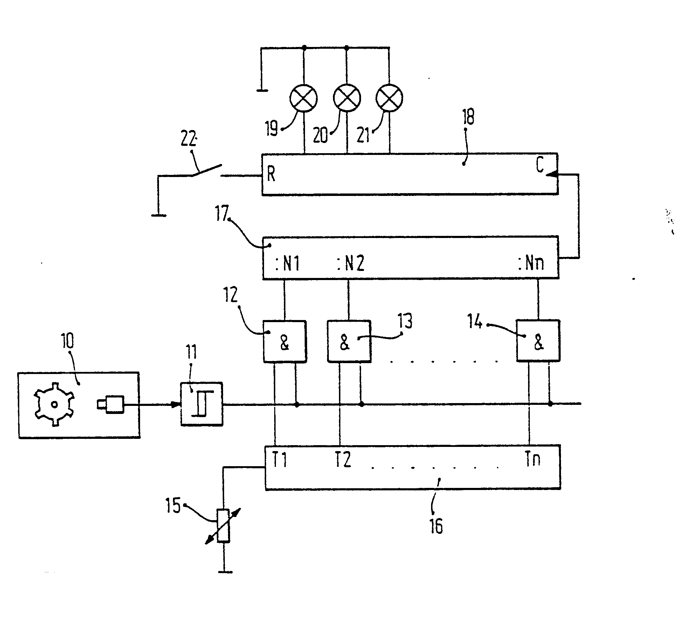

Ein Ausführungsbeispiel der Erfindung ist in der Zeichnung
dargestellt und in der nachfolgenden Beschreibung näher
erläutert. Die einzige Figur zeigt eine schaltungsmäßige
Ausgestaltung des Ausführungsbeispiels.

Beschreibung des Ausführungsbeispiels

Ein von einem Drehzahlsensor 10 abgeleitetes Signal wird
über eine z.B. als Schmitt-Trigger ausgebildete Impulsformerstufe 11 jeweils einem Eingang mehrerer UND-Gatter
12 bis14 zugeführt. Der Drehzahl-Sensor 10 ist dabei vorzugsweise der Drehzahl-Sensor der Zündanlage einer Brennkraftmaschine, der entweder kontaktlos oder als Unterbrecherkontakt ausgeführt sein kann. Ein Temperatursensor
15, der z.B. als temperaturabhängiger Widerstand ausgebildet sein kann, ist mit dem Eingang einer Schwellwert-
Dekodiereinrichtung 16 verbunden. Diese Schwellwert-
Dekodiereinrichtung unterteilt den vorkommenden Temperaturbereich in n Temperatur-Schwellwerte T1 bis Tn und
gibt jeweils bei Erreichen eines solchen Schwellwerts
ein Signal auf den zugeordneten Ausgang der Schwellwert-
Dekodiereinrichtung 16. Jeder Ausgang dieser Schwellwert-
Dekodiereinrichtung 16 ist mit einem Eingang der UND-
Gatter 12 bis 14 verbunden, deren Zahl natürlich beliebig

...

variierbar ist. Die Ausgänge der UND-Gatter 12 bis 14 sind
mit einer entsprechenden Zahl von Eingängen eines einstellbaren Frequenzteilers 17 verbunden. Dieser einstellbare Frequenzteiler 17 erzeugt intern eine Taktfrequenz,
die entsprechend dem jeweils mit einem Steuersignal beaufschlagten Eingang mit einem der Teilungsverhältnisse N1 bis
Nn bewertet wird. Da das Teilungsverhältnis N1 bis Nn in
Abhängigkeit der durch den Temperatursensor 15 erfaßten
Motortemperatur gewählt wird, ist die Ausgangsfrequenz
des Frequenzteilers 17 sowohl drehzahl- wie auch temperaturabhängig. Die Signalfolge mit dieser Frequenz wird
dem Takteingang C einer elektronischen Zählvorrichtung 18
zugeführt und gezählt. Stufenweise werden mit wachsendem
Zählerstand Anzeigeeinheiten 19 bis 21, insbesondere Leuchtdioden aktiviert. Die Zahl dieser Anzeigeeinheiten ist
natürlich beliebig wählbar. Bei Erreichen des höchsten
eingestellten Zählerstands, also bei Aufleuchten der
letzten Anzeigeeinheit 21 ist ein Wartungsintervall abgelaufen, und die Brennkraftmaschine bzw. das Kraftfahrzeug sollte zur Wartung in eine Werkstatt gebracht
werden. Dort wird durch Betätigen eines Tastschalters
22, der mit dem Rücksetzeingang R der Zählvorrichtung
18 verbunden ist, diese Zählvorrichtung 18 rückgesetzt,
wodurch ein neues Wartungsintervall beginnt und alle
Anzeigeeinheiten 19 bis 21 erlöschen.

Durch den programmierbaren Teiler wird abhängig von der
Motortemperatur eine Wichtung der Drehzahlimpulse vorgenommen, wodurch eine vom Belastungszustand des Motors
abhängige Signalfolge gewonnen wird. Diese Drehzahlimpulse werden normalerweise in Abhängigkeit der Drehzahl

...

der Brennkraftmaschine gewählt. Im Einzelfall ist natürlich
auch eine Erfassung der Drehzahl der Räder des Fahrzeugs
möglich.

- 0076454

R. 17388

18.9.1981 Ve/Hm

ROBERT BOSCH GMBH, 7000 STUTTGART 1

Ansprüche

1. Anzeigevorrichtung für Wartungsintervalle bei Brennkraftmaschinen, insbesondere in Kraftfahrzeugen, mit einer
elektronischen Zählvorrichtung zur Zählung von drehzahl-
und temperaturabhängigen Zählimpulsen, wobei bei wenigstens einem festlegbaren Zählerstand eine Anzeigeeinheit
(19 bis 21) aktiviert wird, dadurch gekennzeichnet, daß
die drehzahlabhängigen Zählimpulse über einen einstellbaren
Frequenzteiler (17) der Zählvorrichtung (18) zuführbar sind,
wobei die Einstellung des Teilungsverhältnisses durch das
temperaturabhängige Signal erfolgt.

2. Anzeigevorrichtung nach Anspruch 1, dadurch gekennzeichnet, daß die Temperatur der Brennkraftmaschine über
einen Temperatursensor (15) erfaßt wird, dessen Signal
an eine Schwellwert-Dekodiereinrichtung (16) angelegt
ist, wobei jeder Dekodierwert ausgangsseitig einen Teilereingang des einstellbaren Frequenzteilers (17) steuert.

. . .

00764154

3. Anzeigevorrichtung nach Anspruch 1 oder 2, dadurch gekennzeichnet, daß mehreren Zählerständen der Zählvorrichtung (18) stufenweise Anzeigeeinheiten (19 bis 21) zugeordnet sind.

Europäisches
Patentamt

**EUROPÄISCHER RECHERCHENBERICHT**

**0076454**
Nummer der Anmeldung

EP 82 10 8952

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US-A-4 129 037 (TOALSON) <br> * Spalte 1, Zeile 1 - Spalte 4, Zeile 15; Figuren 1,2 * | 1,2 | F 02 B 77/08 <br> B 60 Q 9/00 <br> G 07 C 3/00 |
| A | FR-A-2 479 333 (TALBOT) <br> * Seite 4, Zeile 19 - Seite 5, Zeile 27; Figur 3 * | 2,3 | |
| A | US-A-3 593 012 (LANG) <br> * Spalte 1, Zeile 1 - Spalte 2, Zeile 21; Figur 1 * | 1 | |
| A | DE-A-2 335 960 (V. DO) <br> * Seite 1, Absatz 1; Seite 6; Figur 1 * | 1 | |
| A | CH-A- 416 190 (BBC) <br> * Seite 1, Zeilen 1-45; Figur 1 * | 1 | RECHERCHIERTE SACHGEBIETE (Int. Cl. 3) |
| P | EP-A-0 057 820 (B.M.W.) <br> * Ansprüche; Figuren * | 1 | F 02 B <br> B 60 Q <br> F 01 M <br> G 07 C |
| E | EP-A-0 062 868 (B.M.W.) <br> * Ansprüche; Figuren * | 1 | |

Der vorliegende Recherchenbericht wurde für alle Patentansprüche erstellt.

| Recherchenort <br> DEN HAAG | Abschlußdatum der Recherche <br> 06-01-1983 | Prüfer <br> KOOIJMAN F.G.M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82